(19) Europäisches Patentamt
European Patent Office
Office européen des brevets

(11) EP 0 703 972 B1

(12) **EUROPÄISCHE PATENTSCHRIFT**

(45) Veröffentlichungstag und Bekanntmachung des Hinweises auf die Patenterteilung:
**02.01.1997 Patentblatt 1997/01**

(21) Anmeldenummer: **94918383.4**

(22) Anmeldetag: **03.06.1994**

(51) Int Cl.[6]: **C11D 3/37**, C08F 283/04, C08F 283/00 // (C08F283/00, 226:06)

(86) Internationale Anmeldenummer:
**PCT/EP94/01801**

(87) Internationale Veröffentlichungsnummer:
**WO 94/29422 (22.12.1994 Gazette 1994/28)**

(54) **GEPFROPFTE POLYAMIDOAMINE UND GEPFROPFTE POLYETHYLENIMINE, VERFAHREN ZU IHRER HERSTELLUNG UND IHRE VERWENDUNG ALS ZUSATZ ZU WASCHMITTELN**

GRAFTED POLYAMIDOAMINES AND GRAFTED POLYETHYLENE IMINES, PROCESS FOR PRODUCING THE SAME AND THEIR USE AS ADDITIVES IN WASHING AGENTS

POLYAMIDOAMINES GREFFEES ET IMINES DE POLYETHYLENE GREFFEES, LEUR PROCEDE DE PREPARATION ET LEUR UTILISATION COMME ADDITIFS D'AGENTS DE LAVAGE

(84) Benannte Vertragsstaaten:
**DE FR GB IT**

(30) Priorität: **16.06.1993 DE 4319934**

(43) Veröffentlichungstag der Anmeldung:
**03.04.1996 Patentblatt 1996/14**

(73) Patentinhaber: **BASF AKTIENGESELLSCHAFT**
**67056 Ludwigshafen (DE)**

(72) Erfinder:
- **DETERING, Jürgen**
**D-67117 Limburgerhof (DE)**
- **SCHADE, Christian**
**D-67061 Ludwigshafen (DE)**
- **OPPENLAENDER, Knut**
**D-67061 Ludwigshafen (DE)**
- **ZIRNSTEIN, Michael**
**D-69198 Schriesheim (DE)**
- **SCHERR, Günter**
**D-67065 Ludwigshafen (DE)**
- **TRIESELT, Wolfgang**
**D-67063 Ludwigshafen (DE)**
- **SCHWENDEMANN, Volker**
**D-67434 Neustadt (DE)**

(56) Entgegenhaltungen:
**EP-A- 0 068 232**
**EP-A- 0 285 038**
**EP-A- 0 473 088**
**WO-A-92/04437**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 703 972 B1

## Beschreibung

Die Erfindung betrifft mit 1-Vinylpyrrolidon, 1-Vinyltriazol und/ oder 1-Vinylimidazolen gepfropfte Polyamidoamine und gepfropfte Polyethylenimine, Verfahren zu ihrer Herstellung durch radikalisch iniierte Polymerisation von 1-Vinylpyrrolidon, 1-Vinyltriazol und/oder 1-Vinylimidazolen in Gegenwart von Polyamidoaminen und/oder Polyethyleniminen und die Verwendung der so erhältlichen gepfropften Polyamidoamine und gepfropften Polyethylenimine in Waschmitteln sowie Waschmittel, die die gepfropften Produkte enthalten.

Aus der DE-B-22 32 353 sind Wasch- und Reinigungsmittelmischungen bekannt, die im wesentlichen aus 95 bis 60 Gew.-% nichtionischen Detergentien und 5 bis 40 Gew.-% eines teilweise oder vollständig wasserlöslichen Polyvinylpyrrolidons bestehen und im wesentlichen von anionischen oberflächenaktiven Mitteln frei sind. Die Polymerisate des Vinylpyrrolidons verhindern beim Waschvorgang den Farbstoffübergang von gefärbten auf weiße Textilien. Die Polymerisate des Vinylpyrrolidons haben Molekulargewichte in dem Bereich von etwa 10 000 bis etwa 1 000 000. Es kommen sowohl Homopolymerisate als auch Copolymerisate des Vinylpyrrolidons in Betracht. Als geeignete Comonomere werden Acrylnitril oder Maleinsäureanhydrid genannt. Die Wirksamkeit der Vinylpyrrolidonpolymerisate als Farbübertragungsinhibitor wird jedoch von anionischen Tensiden stark beeinträchtigt.

Aus der DE-A-28 14 287 sind Wasch- und Reinigungsmittel bekannt, die anionische und/oder nichtionische Tenside, Gerüstsubstanzen und sonstige übliche Waschmittelzusätze sowie als verfärbungsinhibierende Additive 0,1 bis 10 Gew.-% an wasserlöslichen bzw. wasserdispergierbaren Homo- bzw. Copolymerisaten des N-Vinylimidazols enthalten. Die Polymeren haben in 1 gew.-%iger wäßriger Lösung bei 20°C eine spezifische Viskosität von 0,01 bis 5.

Die oben angegebenen Polymeren haben den Nachteil, daß sie weder biologisch abbaubar noch durch Adsorption am Klärschlamm aus dem Abwasser entfernt werden können.

Aus der älteren, nicht vorveröffentlichten DE-Anmeldung P 4 244 386.5 sind Copolymerisate bekannt, die erhältlich sind durch radikalisch initiierte Copolymerisation von Mischungen aus

(a) 20 - 95 Gew.-i 1-Vinylpyrrolidon und/oder 1-Vinylimidazolen und
(b) 5 - 80 Gew.- wasserunlöslichen Polymeren, die mindestens eine ethylenisch ungesättigte Doppelbindung und/ oder eine Mercaptogruppe im Molekül enthalten.

Diese Copolymerisate werden als Zusatz zu Waschmitteln zur Inhibierung der Farbstoffübertragung während des Waschvorgangs verwendet. Sie sind durch Adsorption am Klärschlamm aus dem Abwasser eliminierbar.

Aus der EP-A-0 068 232 sind flüssige Waschmittel bekannt, die nichtionische oder kationische Tenside in Kombination mit Polyethyleniminen, Polyaminen, Polyaminoamiden oder Polyacrylamiden enthalten. Die Waschmittel sind frei von textilweichmachenden quartären Ammoniumverbindungen sowie im wesentlichen phosphatfrei. Die in den flüssigen Waschmitteln enthaltenen Polymeren sollen während des Waschvorgangs die Farbstoffübertragung von gefärbtem auf nichtgefärbte Textilien unterdrücken bzw. verhindern. Ihre Wirkung ist jedoch relativ gering.

Der vorliegenden Erfindung liegt die Aufgabe zugrunde, neue Stoffe zur Verfügung zu stellen, die als Waschmitteladditiv geeignet sind und während des Waschvorgangs eine Farbstoffübertragung von gefärbten auf nichtgefärbte Textilien weitgehend unterdrücken bzw. verhindern und die aus dem Abwasser eliminierbar sind.

Die Aufgabe wird erfindungsgemäß gelöst mit gepfropften Polyamidoaminen und gepfropften Polyethyleniminen, die erhältlich sind durch radikalisch initiierte Polymerisation von

(a) 1-Vinylpyrrolidon, 1-Vinyltriazol, 1-Vinylimidazolen der Formel

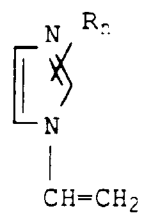

(I),

in der R=H, $CH_3$ oder $C_2H_5$ und n=1 bis 3 bedeuten, Mischungen der genannten Monomeren oder Mischungen aus mindestens einem der genannten Monomeren mit bis zu 20 Gew.-% anderen monoethylenisch ungesättigten Monomeren
in Gegenwart von

(b) wasserlöslichen oder in Wasser dispergierbaren Polyamidoaminen, Polyethyleniminen oder deren Mischungen

im Gewichtsverhältnis (a):(b) von 5:95 bis 95:5.

Gegenstand der Erfindung ist außerdem ein Verfahren zur Herstellung von gepfropften Polyamidoaminen und gepfropften Polyethyleniminen, das dadurch gekennzeichnet ist, daß man

(a) 1-Vinylpyrrolidon, 1-Vinyltriazol, 1-Vinylimidazolen der Formel

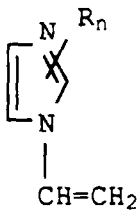

(I),

in der R-H, $CH_3$ oder $C_2H_5$ und n=1 bis 3 bedeuten, Mischungen der genannten Monomeren oder Mischungen aus mindestens einem der genannten Monomeren mit bis zu 20 Gew.-% anderen monoethylenisch ungesättigten Monomeren
in Gegenwart von

(b) wasserlöslichen oder in Wasser dispergierbaren Polyamidoaminen, Polyethyleniminen oder deren Mischungen im Gewichtsverhältnis (a):(b) von 5:95 bis 95:5 radikalisch polymerisiert.

Die so erhältlichen gepfropften Polyamidoamine und gepfropften Polyethylenimine werden als Zusatz zu Waschmitteln zur Inhibierung der Farbstoffübertragung während des Waschvorgangs verwendet.

Monomere der Gruppe (a) sind 1-Vinylpyrrolidon, 1-Vinyltriazol und 1-Vinylimidazole der Formel

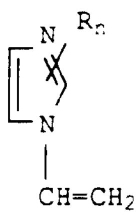

(I),

in der R=H, $CH_3$ oder $C_2H_5$ und n=1 bis 3 bedeuten. In der Formel I kann der der Substituent R in 2-, 4- und 5-Stellung am Imidazolring stehen. In Betracht kommende Verbindungen sind beispielsweise 1-Vinylimidazol, 1-Vinyl-2-methylimidazol, 1-Vinyl-2,4-dimethylimidazol, 1-Vinyl-2,4,5-trimethylimidazol, 1-Vinyl-2-ethylimidazol, 1-Vinyl-4,5-diethylimidazol und 1-Vinyl-2,4,5-triethylimidazol. Man kann auch Mischungen der genannten Monomere im beliebigen Verhältnis einsetzen, z.B. Mischungen aus 1-Vinylpyrrolidon und 1-Vinylimidazol oder Mischungen aus 1-Vinylimidazol und 1-Vinyl-2-methylimidazol.

Die Monomeren der Gruppe (a) können entweder allein oder in Mischung untereinander mit bis zu 20 Gew.-% anderen monoethylenisch ungesättigten Monomeren bei der Polymerisation eingesetzt werden. Hierbei handelt es sich vorzugsweise um Monomere, die ein basisches Stickstoffatom enthalten, entweder in Form der freien Basen oder in quaternierter Form sowie um Monomere, die über eine Amidogruppe verfügen, die gegebenenfalls substituiert sein kann. Geeignete Monomere dieser Art sind beispielsweise N,N'-Dialkylaminoalkyl(meth)acrylate, z.B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Diethylaminopropylmethacrylat, Dimethylaminobutylacrylat, Dimethylaminobutylmethacrylat, Dimethylaminoneopentylacrylat, Dimethylaminoneopentylmethacrylat. Weitere geeignete basische Monomere dieser Gruppe sind N, N'-Dialkylaminoalkyl(meth) acrylamide, z. B. N,N'-Di-$C_1$-bis $C_3$-Alkylamino-$C_2$-$C_6$-Alkyl (meth)acrylamide, wie Dimethylaminoethylacrylamid, Dimethylaminoethylmethacrylamid, Diethylaminoethylacrylamid, Diethylaminoethylmethacrylamid, Dipropylaminoethylacrylamid, Dipropylaminoethylmethacrylamid, Dimethylaminopropylacrylamid, Dimethylaminopropylmethacrylamid, Diethylaminopropylacrylamid, Diethylaminopropylmethacrylamid, Dimethylaminoneopentylacrylamid, Dimethylaminoneopentylmethacrylamid und Dialkylaminobutylacrylamid. Weitere geeignete Monomere dieser Gruppe sind 4-Vinylpyridin, 2-Vinylpyridin und/oder Diallyl(di)alkylamine, bei denen die Alkylgruppe 1 bis 12 C-Atome aufweist.

Die oben genannten basischen Monomeren werden bei der Copolymerisation in Form der freien Basen, der Salze mit organischen oder anorganischen Säuren oder in quaternierter Form eingesetzt. Zur Salzbildung eignen sich beispielsweise Carbonsäuren mit 1 bis 7 Kohlenstoffatomen, z.B. Ameisensäure, Essigsäure oder Propionsäure, Benzolsulfonsäure, p-Toluolsulfonsäure oder anorganische Säuren wie Halogenwasserstoffsäuren, beispielsweise Salzsäure oder Bromwasserstoffsäure. Die oben beispielhaft genannten basischen Monomeren können auch in quaternierter Form eingesetzt werden. Zur Quaternierung eignen sich beispielsweise Alkylhalogenide mit 1 bis 18 C-Atomen in der Alkylgruppe, z.B. Methylchlorid, Methylbromid, Methyljodid, Ethylchlorid, Propylchlorid, Hexylchlorid, Dodecylchlorid, Laurylchlorid und Benzylhalogenide, insbesondere Benzylchlorid und Benzylbromid. Die Quaternierung der stickstoffhaltigen basischen Monomeren kann auch durch Umsetzung dieser Verbindungen mit Dialkylsulfaten, insbesondere Diethylsulfat oder Dimethylsulfat, vorgenommen werden. Beispiele für quaternierte Monomere dieser Gruppe sind Trimethylammoniumethylmethacrylatchlorid, Dimethylethylammoniumethylmethacrylatethylsulfat und Dimethylethylammoniumethylmethacrylamidethylsulfat. Weitere geeignete Monomere sind 1-Vinylimidazoliumverbindungen der Formel

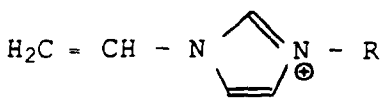

$X^{\ominus}$ (II),

in der R = H, $C_1$-bis $C_{18}$-Alkyl oder Benzyl und $X^{\ominus}$ ein Anion ist.

Das Anion kann ein Halogenion oder auch der Rest einer anorganischen oder organischen Säure sein. Beispiele für quaternierte 1-Vinylimidazole der Formel I sind 3-Methyl-1-vinylimidazoliumchlorid, 3-Benzyl-1-vinylimidazoliumchlorid, 3-n-Dodecyl-1-vinylimidazoliumbromid und 3-n-Octadecyl-1-vinylimidazoliumchlorid.

Falls die obengenannten Monomeren zusammen mit Vinylpyrrolidon, Vinyltriazol oder den Vinylimidazolen eingesetzt werden, sind sie in der Mischung vorzugsweise in einer Menge von 1 bis 18 Gew.-% enthalten. Die Monomeren der Gruppe (a) werden bei der Copolymerisation in Mengen von 5 bis 95, vorzugsweise 30 bis 90 Gew.-%, bezogen auf die Verbindungen der Gruppen (a) und (b), eingesetzt.

Als Verbindungen der Gruppe (b) kommen wasserlösliche oder in Wasser dispergierbare Polyamidoamine oder Polyethylenimine sowie Mischungen dieser beiden Verbindungsklassen in Betracht.

Wasserlösliche oder in Wasser dispergierbare Polyamidoamine sind seit langem bekannt. Sie werden beispielsweise in der US-A-4 144 123 als Ausgangsmaterialien zur Herstellung von Retentions- und Entwässerungshilfsmitteln für die Papierherstellung beschrieben. Die Polyamidoamine sind beispielsweise dadurch erhältlich, daß man

1) Diamine und/oder Polyalkylenpolyamine mit

2) mindestens zweibasischen Carbonsäuren, die bis zu 50 Mol-% durch einbasische Aminosäuren, einbasische Hydroxycarbonsäuren und/oder durch einbasische Carbonsäuren ersetzt sein können,

im Molverhältnis (1) zu (2) von 1 : 0,5 bis 1 : 2 kondensiert.

Als Komponente (1) kommen Diamine und/oder Polyalkylenpolyamine in Betracht. Geeignete Diamine sind beispielsweise Ethylendiamin, Propylendiamin, 1,4-Diaminobutan, 1,6-Hexamethylendiamin, Neopentandiamin, 4,4'-Diaminodiphenylmethan, 4,4'-Diaminodicyclohexylmethan, 3,3'-Dimethyl-4,4'-diaminodiphenylmethan und Phenylendiamin. Als Diamine kommen außerdem $\alpha,\omega$-Diaminoverbindungen von Polyalkylenoxiden in Betracht. Die Polyalkylenoxide leiten sich von Ethylenoxid, Propylenoxid oder Butylenoxiden ab bzw. von Polytetrahydrofuran. Sie enthalten üblicherweise 2 bis 100, vorzugsweise 3 bis 50 Alkylenoxid-Einheiten. Vorzugsweise geht man von Polyethylenoxiden, Polypropylenoxiden oder von Blockcopolymerisaten aus Ethylenoxid und Propylenoxid aus. Die Blockcopolymerisate können Ethylenoxid und Propylenoxid in beliebigen Verhältnissen einpolymerisiert enthalten. Aus den genannten Polyalkylenoxiden erhält man beispielsweise die als Komponente (1) in Betracht kommenden $\alpha,\omega$-Diamine, indem man die Polyalkylenoxide mit Ammoniak unter Druck umsetzt. Unter Polyalkylenpolyaminen sollen Verbindungen verstanden werden, die mindestens 3 basische Stickstoffatome im Molekül enthalten z.B. Diethylentriamin, Triethylentetramin, Tetraethylenpentamin, Pentaethylenhexamin, Diaminopropylethylendiamin (N,N'-Bis-(3-aminopropyl)-1,2-diaminoethan), Ethylenpropylentriamin, Trisaminopropylamin und Polyethylenimine, mit Molmassen von vorzugsweise 300 bis 20.000. Vorzugsweise setzt man als Komponente (1) Diethylentriamin, 3-(2-Aminoethyl)aminopropylamin, Dipropylentriamin und/oder N,N'-Bis-(3-aminopropyl)-1,2-diaminoethan ein.

Als Komponente (2) zur Herstellung von Polyamidoaminen kommen mindestens zweibasische Carbonsäuren, die bis zu 50 Mol-% durch einbasische Aminosäuren und/oder durch einbasische Hydroxycarbonsäuren ersetzt sein können, in Betracht. Geeignete zweibasische Carbonsäuren sind beispielsweise alle Carbonsäuren mit 2 bis 10 Kohlenstoffatomen wie Oxalsäure, Malonsäure, Bernsteinsäure, Weinsäure, Maleinsäure, Itaconsäure, Glutarsäure, Adipinsäure, Korksäure, Sebacinsäure, o-Phthalsäure und Terephthalsäure. Weitere geeignete Verbindungen der Komponente b) sind beispielsweise Butantetracarbonsäure, Propantricarbonsäure und Citronensäure sowie zweibasische Aminosäuren wie Iminodiessigsäure, Asparaginsäure und Glutaminsäure.

Die mindestens zweibasischen Carbonsäuren, d.h. Carbonsäuren, die mindestens zwei Carboxylgruppen im Molekül enthalten, können bis zu 50 Mol-% durch einbasische Aminosäuren wie Glycin, Alanin, Valin, Leucin, Serin, Threonin, Cystein oder durch einbasische Hydroxycarbonsäuren oder durch einbasische Carbonsäuren ersetzt sein. Geeignete einbasische Hydroxycarbonsäuren sind beispielsweise, Hydroxyessigsäure, Milchsäure, Hydroxybuttersäure und 6-Hydroxyhexansäure. Auch Derivate von Hydroxycarbonsäuren, wie Lactone, sind geeignet, z.B. Butyrolacton und Caprolacton.

Geeignete einbasische Carbonsäuren sind beispielsweise Benzoesäure, Essigsäure, Stearinsäure, Ölsäure, Anthranilsäure und Nicotinsäure. Bei den einbasischen Aminosäuren ist die Stellung der Aminogruppe zur Carboxylgruppe nicht entscheidend. So können außer den genannten α-Aminosäuren auch ebenso einbasische β-, γ- δ- oder ε-Aminosäuren die mindestens zweibasischen Carbonsäuren bis zu 50 % ersetzen. Von besonderem technischen Interesse ist auch der Einsatz von Derivaten solcher Aminosäuren, z.B. von Caprolactam.

Als Komponente (2) zur Herstellung von Polyamidoaminen werden vorzugsweise Adipinsäure, Glutarsäure, Weinsäure, Citronensäure, Asparaginsäure und/oder Iminodiessigsäure eingesetzt. Anstelle einer einzigen mindestens zweibasischen Dicarbonsäure kann man selbstverständlich Mischungen aus zwei oder mehreren solcher Carbonsäuren bei der Herstellung der Polyamidoamine einsetzen, z.B. Mischungen aus Adipinsäure und Maleinsäure, oder Mischungen aus Adipinsäure und Weinsäure, oder Mischungen aus Adipinsäure, Citronensäure und Iminodiessigsäure, oder Mischungen aus Adipinsäure und Iminodiessigsäure.

Die Polykondensation der Komponenten (1) und (2) erfolgt gemäß den Methoden des Standes der Technik durch Erhitzen der Komponenten (1) und (2) auf Temperaturen von oberhalb 100 bis 250, vorzugsweise 120 bis 200°C und Abdestillieren des bei der Kondensation entstehenden Wassers. Als Komponente (2) setzt man üblicherweise die freien Carbonsäuren ein, man kann jedoch auch Carbonsäurederivate wie Anhydride, Ester, Amide oder Säurehalogenide als Komponente (2) verwenden. Beispiele für solche Derivate sind Maleinsäureanhydrid, Bernsteinsäureanhydrid, Phthalsäureanhydrid und Itaconsäureanhydrid. Bei Einsatz der Anhydride kann die Kondensation bei niedrigeren Temperaturen vorgenommen werden als beim Einsatz von Carbonsäuren. Auch bei Einsatz von Säurehalogeniden, wie Adipinsäuredichlorid, kann man die Kondensation bei tieferen Temperaturen durchführen. Geeignete Ester leiten sich vorzugsweise von Alkoholen mit 1 bis 2 Kohlenstoffatomen ab, z.B. Adipinsäuredimethylester, Adipinsäurediethylester, Weinsäuredimethylester und Iminoessigsäuredimethylester. Geeignete Säureamide sind beispielsweise Adipinsäurediamid, Adipinsäuremonoamid und Glutarsäurediamid.

Die Polyamidoamine haben in 30 %iger wäßriger Lösung eine Viskosität von 1 bis 2000, vorzugsweise 5 bis 800 mPas (gemessen bei 20°C in einem Physica Viskosimeter, Meßkegel 24 und 126 Umdrehungen pro Minute).

Unter Polyethyleniminen sollen alle Polymeren verstanden werden, die durch kationisch initiierte Polymerisation von Ethyleniminen der Formel

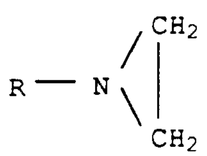 (III),

in der R=H, $CH_3$, $C_2H_5$,

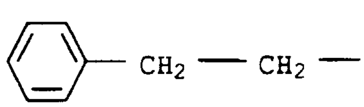 , 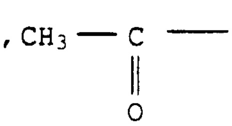 ,

$-CH_2-CH_2-OH$ , $-CH_2-CH_2-CN$ , $H_2N-CH_2-CH_2-$ und

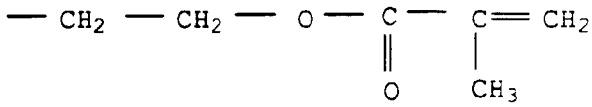

bedeuten, erhalten werden,
sowie die Umsetzungsprodukte der Polymeren mit beispielsweise Ethylenoxid, Propylenoxid, Dialkylcarbonaten wie Ethylencarbonat oder Propylencarbonat, Lactonen wie Butyrolacton, Harnstoff, Formaldehyd/Amin-Mischungen, Carbonsäuren wie Ameisensäure, Essigsäure oder Vinylessigsäure. Solche Umsetzungsprodukte können, bezogen auf das Polyethylenimin, bis zu 400 Gew.-% Ethylenoxid und/oder Propylenoxid und für die übrigen Verbindungen bis zu 200 Gew.-% enthalten. Die Verbindungen der Formel III werden kationisch polymerisiert, z.B. verwendet man als Katalysator Brönstedt-Säuren wie Schwefelsäure, Phosphorsäure, p-Toluolsulfonsäure oder Carbonsäuren wie Ameisensäure, Essigsäure oder Propionsäure oder Lewis-Säuren wie Halogenide, beispielsweise Zinkchlorid oder Alkylhalogenide wie Methylchlorid, Ethylchlorid, Benzylchlorid oder Ethylenchlorid. Geeignete Polyethylenimine können auch durch Umsetzung von Ethylenchlorid mit Ammoniak und Aminen erhalten werden. Die Molekulargewichte der Polyethylenamine liegen in dem Bereich von 400 bis 200 000, vorzugsweise werden Polyethylenimine als Komponente (b) eingesetzt, die durch Polymerisieren von Ethylenimin erhältlich sind. Polymerisate dieser Art sind Handelsprodukte. Daneben können auch Polyalkylenpolyamine verwendet werden, die 10 bis 4500 Stickstoffatome im Molekül enthalten.

Die gepfropften Polyamidoamine und die gepfropften Polyethylenimine werden dadurch hergestellt, daß man

(a) 1-Vinylpyrrolidon, 1-Vinyltriazol, 1-Vinylimidazolen der Formel I, Mischungen der genannten Monomeren oder Mischungen aus mindestens einem der genannten Monomeren mit bis zu 20 Gew.-% anderen monoethylenisch ungesättigten Monomeren in Gegenwart von

(b) wasserlöslichen oder in Wasser dispergierbaren Polyamidoaminen, Polyethyleniminen oder deren Mischungen

im Gewichtsverhältnis (a):(b) von 5:95 bis 95:5 radikalisch polymerisiert. Die Polymerisation erfolgt vorzugsweise in einem Lösemittel wie Wasser, Alkoholen oder Ketonen mit Siedepunkten von jeweils höchstens 135°C oder Mischungen der genannten Lösemittel in Gegenwart Radikale bildender Initiatoren sowie gegebenenfalls von Tensiden, Schutzkolloiden und/oder Reglern. Die Pfropfpolymerisation der Verbindungen der Gruppen (a) und (b) kann nach allen Methoden der Lösungs-, Suspensions-, Emulsions- oder Fällungspolymerisation durchgeführt werden. Die Konzentration der Komponenten (a) und (b) ist in den genannten Löse- bzw. Verdünnungsmitteln nicht kritisch und liegt vorteilhafterweise in dem Bereich von 1-80, vorzugsweise 20-60 Gew.-%. Als Lösemittel kommen beispielsweise Methanol, Ethanol, Isopropanol, n-Propanol, n-Butanol, Isobutanol, tert.-Butanol, Essigsäuremethylester, Essigsäureethylester, Essigsäureisopropylester, Essigsäure-n-propylester, Propionsäuremethylester, Propionsäureethylester, Methylethylketon, Aceton und Diethylketon in Betracht. Die organischen Lösemittel werden nach Beendigung der Pfropfpolymerisation abdestilliert, wobei ein pulverförmiges Polymerisat anfällt. Man kann die organischen Lösemittel auch durch Wasser austauschen, so daß eine wäßrige Lösung oder Dispersion der Pfropfpolymerisate anfällt.

Die Pfropfpolymerisate werden bevorzugt durch Polymerisieren der Monomeren der Gruppe (a) in Gegenwart der Polymeren der Gruppe (b) in Wasser hergestellt. Man kann dabei die Komponenten (a) und (b) gemeinsam in Form einer wäßrigen Lösung oder einer Lösung in einem organischen Lösemittel in einem Reaktionsgefäß vorlegen und dann die Reaktion durch Zugabe eines Polymerisationsinitiators starten. Man kann jedoch auch die Pfropfcopolymerisation in der Weise durchführen, daß man zunächst eine geringe Menge einer Mischung aus den Komponenten (a) und (b) in einem Polymerisationsbehälter vorlegt, die Copolymerisation durch Zugabe eines Initiators startet und dann die Komponenten (a) und (b) in dem jeweils gewünschten Verhältnis absatzweise oder kontinuierlich zufügt. Man kann jedoch auch so verfahren, daß man die gesamte Menge der Komponente (b) vorlegt und die Monomeren (a) absatzweise oder kontinuierlich zufügt. Es ist jedoch auch möglich, die Monomeren (a) zunächst weitgehend, d.h. bis zu 50 % zu polymerisieren und danach erst die Polymeren der Gruppe (b) zuzufügen um erfindungsgemäße Polymerisate zu erhalten.

Die Pfropfpolymerisation wird radikalisch initiiert, wobei man Initiatoren einsetzt, die unter den Polymerisationsbedingungen Radikale bilden. Hierfür kommen alle üblichen Radikale bildenden Initiatoren in Betracht, z.B. Peroxi- und Azoverbindungen, beispielsweise Peroxide, Hydroperoxide und Peroxiester, beispielsweise Wasserstoffperoxid, Dibenzoylperoxid, Di-t-butylperoxid, t-Butylhydroperoxid, t-Butylperpivalat und t-Butylperoxy-2-ethylhexanoat sowie Azoverbindungen z.B. 2,2'-Azobis(2-amidinopropan)dihydrochlorid, 2,2'-Azobis(2-methylbutyronitril) und 2,2'-Azobis-[2(2-imidazolin-2-yl)propan]dihydrochlorid. Man kann selbstverständlich auch Initiatormischungen oder die bekannten Redoxinitiatoren verwenden. Die Polymerisationstemperatur liegt vorzugsweise in dem Temperaturbereich von 60 bis 100°C. Selbstverständlich kann man auch außerhalb des angegebenen Temperaturbereiches polymerisieren, wobei

man bei höheren Temperaturen, z.B. in dem Bereich von 120 bis 140°C die Pfropfpolymerisation in verschlossenen Appaturen unter Druck durchführt.

Die Initiatoren werden in den üblichen Mengen eingesetzt, d.h. in Mengen von beispielsweise 0,2 bis 5 Gew.-%, bezogen auf die Komponenten (a) und (b).

Die Pfropfpolymerisation kann gegebenenfalls in Gegenwart von Schutzkolloiden oder Tensiden durchgeführt werden. Diese Verbindungen werden bevorzugt dann eingesetzt, wenn die Polymeren der Gruppe (b) nicht vollständig wasserlöslich sind sondern in Wasser dispergiert werden sollen. Geeignete Schutzkolloide sind beispielsweise Polyvinylpyrrolidon, Copolymere aus N-Vinylpyrrolidon und Vinylacetat, partiell oder vollständig verseifte Polyvinylacetate, Celluloseether oder -ester, Copolymere aus Maleinsäureanhydrid mit Vinylethern, Styrol oder 1-Alkenen, Gelatine, Stärke oder Stärkeester und -ether.

Unter Tensiden sollen alle diejenigen Verbindungen verstanden werden, die die Oberflächenspannung des Wassers erniedrigen, z.B. alkoxylierte Alkohole, Amine oder Phenole. Sofern man bei der Pfropfpolymerisation Schutzkolloide einsetzt, betragen die Mengen üblicherweise 0,1 bis 10 Gew.-%, bezogen auf die Verbindungen (a) und (b). Die Tenside werden in den gleichen Mengen eingesetzt.

Um nach dem erfindungsgemäßen Verfahren Pfropfpolymerisate mit niedrigen K-Werten herzustellen, wird die Pfropfpolymerisation zweckmäßigerweise in Gegenwart von Reglern durchgeführt. Geeignete Regler sind beispielsweise Mercaptoverbindungen wie Mercaptoethanol, Mercaptopropanol, Mercaptobutanol, Mercaptoessigsäure, Mercaptopropionsäure oder Alkylmercaptane mit 4 bis 20 Kohlenstoffatomen in der Alkylgruppe. Ein Beispiel für solche Verbindungen ist Dodecylmercaptan. Als Regler eignen sich außerdem Halogenverbindungen wie Tetrachlormethan, Chloroform und Bromtrichlormethan sowie Allylverbindungen wie Allylalkohol, wie Alkylhydroxylamine wie Diethylhydroxylamin, Disulfide wie Cystin oder Diethanoldisulfid, Sulfide, Sulfite wie Natriumsulfit oder Natiumbisulfit, Hydrophosphite, Ameisensäure, Ammoniumformiat, Aldehyde oder Hydrazinsulfat. Falls die Pfropfpolymerisation in Gegenwart von Reglern durchgeführt wird, setzt man üblicherweise 0,05 bis 20 Gew.-%, bezogen auf die Gesamtmenge der bei der Polymerisation eingesetzten Monomeren (a) ein.

Die Pfropfpolymerisate können gegebenenfalls dadurch modifiziert werden, daß man sie in Gegenwart von Monomeren herstellt, die mindestens 2 monoethylenisch ungesättigte nichtkonjugierte Doppelbindungen im Molekül aufweisen. Solche Verbindungen werden bei Polymerisationen üblicherweise als Vernetzer verwendet. Sie erhöhen das Molekulargewicht der entstehenden Copolymerisate. Geeignete Vernetzer dieser Art sind beispielsweise die Diacrylate oder Dimethacrylate von Glykolen oder Polyalkylenglykolen wie Ethylenglykoldiacrylat, Diethylenglykoldimethacrylat, Diethylenglykoldiacrylat oder die Diacrylate von Polyalkylenglykolen mit Molmassen von 300 bis 2000, Divinylbenzol, Divinyldioxan oder Triallylether von Zuckern. Falls Vernetzer bei der Pfropfpolymerisation mitverwendet werden, betragen die eingesetzten Mengen vorzugsweise 0,01 bis 2 Gew.-%, bezogen auf die Monomeren (a).

Die Pfropfpolymerisation wird üblicherweise in einer Inertgasatmosphäre unter Ausschluß von Sauerstoff durchgeführt. Während der Pfropfpolymerisation wird üblicherweise für eine gute Durchmischung der Reaktionsteilnehmer gesorgt. Die erfindungsgemäßen gepfropften Polyamidoamine oder gepfropften Polyethylenimine können durch weitere Verfahrensschritte wie Wasserdampfbehandlung oder teilweises Abdestillieren des Lösemittels zusammen mit anderen flüchtigen Anteilen von unerwünschten Verunreinigungen befreit werden. In manchen Fällen kann es vorteilhaft sein, die Pfropfpolymerisate nachträglich einer oxidativen Behandlung zu unterziehen. Zu diesem Zweck läßt man die Oxidationsmittel bevorzugt auf eine wäßrige Lösung der Pfropfpolymerisate einwirken. Geeignete Oxidationsmittel sind Wasserstoffperoxid, Alkylhydroperoxide wie tert.-Butylhydroperoxide oder Cumolhydroperoxid, Persäuren, Natriumhypochlorit, Natriumperborat, Natriumpercarbonat oder Natriumpersulfat. Besonders bevorzugt ist der Einsatz von Wasserstoffperoxid. Sofern eine oxidative Nachbehandlung vorgenommen wird, setzt man Wasserstoffperoxid in Mengen von 1 bis 50 Gew.-%, bezogen auf die Pfropfpolymerisate ein. Die Behandlung mit den Oxidationsmitteln erfolgt im Temperaturbereich von 50 bis 120°C, wobei man bei Temperturen oberhalb von 100° üblicherweise in druckdicht verschlossenen Apparaturen arbeitet. Die Pfropfpolymerisate können gegebenenfalls aus der Lösung bzw. Dispersion isoliert werden. Sie haben K-Werte von 10 bis 250 (bestimmt nach H. Fikentscher in 1%iger wäßriger Lösung bei einer Temperatur von 25°C und pH 7.

Die oben beschriebenen Pfropfpolymerisate werden als Zusatz zu Waschmitteln zur Inhibierung der Farbstoffübertragung während des Waschvorgangs verwendet. Vorzugsweise kommen dafür solche Pfropfpolymerisate in Betracht, die einen K-Wert in dem Bereich von 12 bis 90 haben.

Die Waschmittel können pulverförmig sein oder auch in flüssiger Einstellung vorliegen. Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B.

Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, andere Farbübertragungsinhibitoren, Vergrauungsinhibitoren und/oder Bleichaktivatoren.

Waschmittel auf Basis von Tensiden und gegebenenfalls Buildern sowie anderen üblichen Bestandteilen enthalten die erfindungsgemäßen Pfropfpolymerisate aus den Komponenten (a) und (b) in Mengen von 0,05 bis 10, vorzugsweise 0,25 bis 5 Gew.-%.

Die Copolymerisate wirken beim Waschen von gefärbten und weißen Textilien als Farbübertragungsinhibitor und werden in Kläranlagen zumindest teilweise am Klärschlamm adsorbiert.

Die Prozentangaben in den Beispielen sind Gewichtsprozent. Die K-Werte wurden nach H. Fikentscher, Cellulose-Chemie, Band 13, 58-64 und 71-74 (1932), in 1 %iger Lösung in Wasser bei einer Temperatur von 25°C und einem pH-Wert von 7 bestimmt.

Beispiele

Zum Vergleich mit dem Stand der Technik werden folgende Polymere eingesetzt.

Polyamidoamin 1

In einem mit Destillationsbrücke, Rührer und Stickstoffzuleitung ausgestatteten Kolben wurden 100 g Wasser unter Stickstoffatmosphäre vorgelegt und auf 80°C erwärmt. Bei dieser Temperatur trug man unter Rühren 150 g Adipinsäure ein und fügte anschließend innerhalb einer Stunde 171 g eines Gemisches aus N-Aminopropylethylendiamin und N, N-Bis(aminopropyl)ethylendiamin zu und erhitzte das Reaktionsgemisch zunächst auf 140°C und steigerte die Temperatur danach auf 170°C, bei der die Kondensation innerhalb von 24 Stunden durchgeführt wurde. Während dieser Zeit wurde das Reaktionsgemisch gerührt und Wasser abdestilliert. Danach kühlte man das Reaktionsgemisch auf eine Temperatur_von 140°C ab und verdünnte es durch Zusatz von 200 ml Wasser. Man erhielt eine gelbe klare Lösung mit einem Gehalt an nichtflüchtigen Anteilen von 54 % und einer Viskosität von 1100 mPa·s (bei 20°C im Physika Viskosimeter, Meßkegel 24,35 U/min).

Polyamidoamin 2

In einem mit Destillationsbrücke, Rührer und Stickstoffzuleitung ausgestatten Kolben wurden 547,6 g 98%-iges Diethylentriamin unter Stickstoffatmosphäre auf eine Temperatur von 80°C erwärmt und innerhalb von 0,5 Stunden portionsweise mit 656,6 g Adipinsäure versetzt. Während der Zugabe der Adipinsäure wurde die Mischung gerührt und zunächst auf eine Temperatur von 130°C erhitzt. Nach Beendigung der Adipinsäurezugabe erwärmte man das Reaktionsgemisch auf 170°C und destillierte im Verlauf von 24 Stunden Wasser aus dem Reaktionsgemisch. Das Polyamidoamin wurde auf 135°C abgekühlt und in 800 ml Wasser gelöst. Man erhielt eine gelbe, klare Lösung mit einem Gehalt an nicht flüchtigen Anteilen von 57 % und einer Viskosität von 1320 mPa·s (gemessen bei 20°C im Physika Viskosimeter, Meßkegel 24, 35 U/min).

Polyamidoamin 3

Analog zur Herstellung des Polyamidoamins 1 wurde dieses Polyamidoamin aus 51 g Adipinsäure, 20 g Iminodiessigsäure und 58,5 g Triethylentetramin hergestellt. Die wäßrige Lösung hatte einen Gehalt an nichtflüchtigen Anteilen von 20 % und eine Viskosität von 520 mPa·s.

Polyethylenimin 1

Handelsübliche wäßrige farblose Lösung mit einer Dichte von 1,07 g/l und einem Feststoffgehalt von 50,7 %. Das Polyethylenimin 1 hatte eine Molmasse von 6500 (bestimmt durch Lichtstreuung in 0,1 %iger wäßriger Natriumchloridlösung).

Beispiel 1

In einem 2 1 fassenden Kolben, der mit einem Rührer und einer Vorrichtung für das Arbeiten unter Stickstoff ausgestattet war, wurden 150 g Polyamidoamin 1 in 450 g Wasser gelöst und unter Stickstoffatmosphäre auf 85°C erhitzt. Nachdem diese Temperatur erreicht war, wurde ein Zulauf aus 150 g N-Vinylpyrrolidon in 250 g Wasser innerhalb von 3 Stunden und ein weiterer Zulauf aus 3 g tert.-Butylperethylhexanoat in 40 g Ethanol während 3 Stunden

zugetropft. Nach Beendigung der Zugabe des Polymerisationsinitiators wurde das Reaktionsgemisch noch 2 Stunden bei 90°C gerührt. Man erhielt eine klare, viskose Lösung mit einem Feststoffgehalt von 28,4 %. Das mit N-Vinylpyrrolidon gepfropfte Polyamidoamin hatte einen K-Wert von 38,2.

Beispiel 2

Beispiel 1 wurde mit der einzigen Ausnahme wiederholt, daß man anstelle des Polyamidoamins 1 jetzt dieselbe Menge an Polyamidoamin 2 einsetzte. Man erhielt eine klare, viskose Lösung mit einem Feststoffgehalt von 28,7 %. Das mit N-Vinylpyrrolidon gepfropfte Polyamidoamin hatte einen K-Wert von 36,4.

Beispiel 3

Beispiel 1 wurde mit der Ausnahme wiederholt, daß man anstelle von N-Vinylpyrrolidon jetzt 150 g N-Vinylimidazol als Monomer einsetzte. Man erhielt eine klare, viskose Lösung mit einem Feststoffgehalt von 27 %. Das mit N-Vinylimidazol gepfropfte Polyamidoamin 1 hatte einen K-Wert von 37,5.

Beispiel 4

Das Beispiel 3 wurde mit der einzigen Ausnahme wiederholt, daß man anstelle von Polyamidoamin 1 jetzt 150 g Polyamidoamin 2 einsetzte. Man erhielt eine klare, viskose Lösung mit einem Feststoffgehalt von 28,1 %. Das mit N-Vinylimidazol gepfropfte Polyamidoamin 2 hatte einen K-Wert von 38,0.

Beispiel 5

In der im Beispiel 1 beschriebenen Apparatur wurden 24 g N-Vinylimidazol in einer Mischung aus 56 g Polyamidoamin 1 in 170 g Wasser innerhalb von 6 Stunden durch Zugabe von 0,5 g tert.-Butylperethylhexanoat in 10 g Ethanol polymerisiert. Man erhielt eine klare, viskose Lösung mit einem Feststoffgehalt von 29,5 %. Das mit N-Vinylimidazol gepfropfte Polyamidoamin 1 hatte einen K-Wert von 29,8.

Beispiel 6

In einem 1 l fassenden Kolben, der mit einem Rührer und einer Vorrichtung für das Arbeiten unter Stickstoff ausgestattet war, wurden 79 g einer 50,7 %igen Lösung von Polyethylenimin 1 und 129 g Wasser vorgelegt und unter Stickstoffatmosphäre auf 85°C erhitzt. Nachdem diese Temperatur erreicht war, wurde ein Zulauf aus 40 g N-Vinylimidazol innerhalb 1 Stunde und ein weiterer Zulauf aus 0,8 g tert.-Butylperethylhexanoat in 10 g Ethanol innerhalb 1 Stunde zugetropft. Nach Beendigung der Zugabe des Polymerisationsinitiators wurde das Reaktionsgemisch noch 2 Stunden bei 90°C gerührt. Man erhielt eine klare, viskose Lösung mit einem Feststoffgehalt von 30,2 %. Das mit N-Vinylimidazol gepfropfte Polyethylenimin 1 hatte einen K-Wert von 53,1.

Beispiel 7

In der im Beispiel 1 angegebenen Apparatur wurden unter den dort angegebenen Polymerisationsbedingungen zu einer Mischung aus 100 g Polyamidoamin 1 und 300 g Wasser eine Lösung von 233 g N-Vinylimidazol in 475 g Wasser und eine Lösung von 4,7 g tert.-Butylperethylhexanoat in 40 g Ethanol während 4 Stunden zugetropft. Man erhielt eine klare, viskose Lösung mit einem Feststoffgehalt von 29,3 %. Das so erhaltene Pfropfpolymerisat hatte einen K-Wert von 43,6.

Beispiel 8

Nach der in Beispiel 6 angegebenen Vorschrift wurde eine Mischung aus 79 g Polyethylenimin 1 und 129 g Wasser mit 40 g N-Vinylpyrrolidon der Pfropfpolymerisation unterworfen. Man erhielt eine klare, viskose Lösung mit einem Feststoffgehalt von 32,2 %. Das Pfropfpolymerisat hatte einen K-Wert von 45,8.

Beispiel 9

Nach der in Beispiel 1 angegebenen Vorschrift wurde eine Mischung aus 100 g Polyamidoamin 1 und 300 g Wasser, eine Lösung von 233 g N-Vinylpyrrolidon in 475 g Wasser und eine Lösung von 4,7 g tert.-Butylperethylhexanoat in 40 g Ethanol der Pfropfpolymerisation unterworfen, die in Abweichung von Beispiel 1, 4 Stunden in Anspruch nahm.

Man erhielt eine klare, viskose Lösung mit einem Feststoffgehalt von 29,3 %. Das Pfropfpolymerisat hatte einen K-Wert von 45,9.

Beispiel 10

Nach der in Beispiel 1 angegebenen Vorschrift polymerisierte man 24 g N-Vinylpyrrolidon in einer Mischung aus 56 g Polyamidoamin 1 und 170 g Wasser. Als Polymerisationsinitiator verwendete man eine Lösung von 0,5 g tert.-Butylperethylhexanoat in 10 g Ethanol. Die Zulaufdauer von N-Vinylpyrrolidon und des Initiators betrug 3 Stunden. Man erhielt eine klare, viskose Lösung mit einem Feststoffgehalt von 30 %. Das Pfropfpolymerisat hatte einen K-Wert von 29,2.

Beispiel 11

In einem 1 1 fassenden Kolben, der mit einem Rührer und einer Vorrichtung für das Arbeiten unter Stickstoff ausgestattet war, wurden 50 g Polyamidoamin 3 in 250 g Wasser vorgelegt und unter einer Stickstoffatmosphäre auf eine Temperatur von 95°C erhitzt. Nachdem diese Temperatur erreicht war, wurde ein Zulauf aus 50 g N-Vinylimidazol innerhalb von 3 Stunden und zur gleichen Zeit ein weiterer Zulauf aus 1,5 g Natriumpersulfat in 50 g Wasser ebenfalls innerhalb von 3 Stunden zugetropft. Nach Beendigung der Zugabe des Polymerisationsinitiators und des Monomeren wird das Reaktionsgemisch noch 2 Stunden gerührt. Man erhielt eine klare, viskose Flüssigkeit mit einem Feststoffgehalt von 26,1 %. Das Pfropfpolymerisat hatte einen K-Wert von 29,8.

Beispiel 12

In der Apparatur aus Beispiel 6 wurden 25 g Polyamidoamin 1, 25 g N-Vinylimdidazol, 0,4 g 2,2'-Azobis(2-amidinopropan)dihydrochlorid und 75 g Wasser vorgelegt und unter Stickstoffatmosphäre auf 85°C erhitzt. Nachdem diese Temperatur erreicht war, wurde ein Zulauf aus 0,8 g der Azoverbindung in 50 g Wasser während 4 Stunden zugetropft. Nach Beendigung der Zugabe des Polymerisationsinitiators wurde das Reaktionsgemisch noch 2 Stunden bei 85°C gerührt. Man erhielt eine klare, viskose Lösung mit einem Feststoffgehalt von 30,0 %. Das mit N-Vinylimidazol gepfropfte Polyamidoamin 1 hatte einen K-Wert von 37,2.

Anwendungstechnische Beispiele

Waschversuche

Zur Prüfung der Wirksamkeit wurde weißes Prüfgewebe gemeinsam mit eingefärbten Textilproben aus Baumwolle im Launderometer gewaschen. Die Messung der aufgetretenen Farbstoffübertragung erfolgte photometrisch. Aus den an den einzelnen Prüfgeweben gemessenen Remissionswerten wurden die jeweiligen Farbstärken bestimmt, aus denen sich die Wirksamkeit der Polymeren ableiten läßt. Eine Wirksamkeit von 100 % bedeutet, daß das Testgewebe seine ursprüngliche Farbstärke beibehielt, es also nicht angefärbt wurde. Eine Wirksamkeit von 0 % wird bei einem Prüfgewebe ermittelt, das die gleiche Farbstärke aufweist wie ein Prüflappen, der ohne Zusatz eines farbstoffübertragungsverhindernden Additivs gewaschen wurde.

Die Textilproben wurden mit folgenden Farbstoffen gefärbt:

| Farbstoff | Name | Constitution number |
|---|---|---|
| 1 | C.I. Direkt Schwarz 51 | 27720 |
| 2 | C.I. Direkt Blau 218 | 24401 |
| 3 | C.I. Direkt Schwarz 22 | 35435 |
| 4 | C.I. Direkt Rot 81 | 28160 |
| 5 | C.I. Direkt Blau 71 | 34140 |
| 6 | C.I. Reaktiv Schwarz 5 | 20505 |
| 7 | C.I. Reaktiv Blau 19 | 61200 |

| Waschbedingungen | |
|---|---|
| Waschgerät | Launderometer |
| Waschzyklen | 1 |
| Temperatur | 60°C |
| Waschdauer | 30 min |
| Wasserhärte | 3 mmol $Ca^{2+}$, $Mg^{2+}$ (4:1)/1 |
| Prüfgewebe | Baumwolle |
| Flottenverhältnis | 1:50 |
| Flottenmenge | 250 ml |
| Waschmittelkonzentration | 7,0 g/l |

| Waschmittelzusammensetzung [%] | |
|---|---|
| Zeolith A | 20 |
| Natriumcarbonat | 11 |
| Dodecylbenzolsulfonat | 5 |
| Seife | 1,3 |
| $C_{13}/C_{15}$-Oxoalkohol x 7 Ethylenoxid-Einheiten | 3,9 |
| Na-Salz eines Copolymerisats aus 70 % Acrylsäure und 30 % Maleinsäure, Molmasse 70000 | 2,7 |
| Na-Carboxymethylcellulose | 0,4 |
| Wasser | 7 |
| Polymer gemäß Tabelle 1 oder 2 | 0,5 oder 1 |
| Natriumsulfat | auf 100 |

Polymer 1 Polyvinylpyrrolidon, K-Wert 30 (1 %ig in H2O), Standardpolymer zum Vergleich. Polymere dieser Art sind als Farbübertragungsinhibitor in handelsüblichen Color-Waschmitteln enthalten.

Tabelle 1

| Einsatzkonzentration der Polymere: 1 % | | | | | | |
|---|---|---|---|---|---|---|
| Wirksamkeit [%] | | | | | | |
| Polymer hergestellt nach Beispiel | 1 | 2 | 3 | 4 | Polyamidoamin 1 | Polyethylenimin 1 |
| Farbstoff 1 | 22,3 | 23,8 | 23,5 | 25,3 | 2,7 | 8,9 |
| Farbstoff 3 | 72,5 | 73,1 | 86,2 | 86,1 | 16,4 | 50,5 |
| Farbstoff 4 | 15,4 | 17,7 | 15,3 | 14,9 | 0 | 2,4 |
| Farbstoff 5 | 97,6 | 97,6 | 98,9 | 98,9 | 18,6 | 24,9 |

Die Ergebnisse der Tabelle 1 zeigen, daß die erfindungsgemäßen Pfropfpolymere eine deutlich höhere Wirksamkeit besitzen als die ihnen zugrundeliegenden Polyamidoamine und Polyethylenimine.

Tabelle 2

| Einsatzkonzentration der Polymere: 0,5 % | | | | | | | |
|---|---|---|---|---|---|---|---|
| Wirksamkeit [%] | | | | | | | |
| Polymer hergestellt nach Beispiel | 5 | 6 | 7 | 8 | 9 | 10 | Polymer 1 |
| Farbstoff 2 | 74,3 | 61,1 | 85,0 | 50,0 | 33,6 | 53,0 | 34,6 |
| Farbstoff 3 | 63,8 | 85,5 | 90,3 | 72,3 | 78,5 | 63,4 | 14,1 |
| Farbstoff 5 | 92,6 | 95,4 | 97,8 | 91,0 | 95,8 | 72,3 | 91,4 |
| Farbstoff 6 | 39,6 | 46,8 | 40,7 | 29,0 | 19,8 | 37,1 | 3,1 |

Tabelle 2 (fortgesetzt)

| Einsatzkonzentration der Polymere: 0,5 % | | | | | | | |
|---|---|---|---|---|---|---|---|
| Wirksamkeit [%] | | | | | | | |
| Polymer hergestellt nach Beispiel | 5 | 6 | 7 | 8 | 9 | 10 | Polymer 1 |
| Farbstoff 7 | 19,3 | 48,9 | 15,9 | 41,9 | 15,5 | 21,5 | 0,4 |

Die Ergebnisse der Tabelle 2 zeigen, daß die erfindungsgemäßen Pfropfpolymere eine deutlich höhere Wirksamkeit als Polyvinylpyrrolidon besitzen.

Adsorptionstest

Geprüft wird das Adsorptionsverhalten der in Tabelle 3 angegebenen Polymeren am Belebtschlamm einer biologischen Kläranlage. Das Polymer wird jeweils in einer wäßrigen Belebtschlammsuspension gelöst. Die Konzentration des Polymers beträgt mindestens 100 mg/l, bezogen auf den gelösten organisch gebundenen Kohlenstoff (DOC). Die Belebtschlammkonzentration beträgt 1 g/l, bezogen auf das Trockengewicht. Nach 48 h wird der DOC nach Absetzen des Schlammes in der überstehenden Lösung gemessen. Feine Belebtschlammpartikel werden vor der DOC-Messung entfernt.

$$\text{Eliminationsgrad in \%} = \frac{\text{DOC (Ausgangswert-DOC (Endwert)}}{\text{DOC (Ausgangswert)}} \times 100$$

Tabelle 3

| Polymer | Eliminationsgrad [%] |
|---|---|
| Polymer 1 | <5 |
| Beispiel 1 | 27 |
| Beispiel 3 | 43 |

Die Beispiele belegen, daß die erfindungsgemäßen Polymere ein deutlich verbessertes Eliminationsverhalten am Klärschlamm als Polyvinylpyrrolidon aufweisen.

**Patentansprüche**

**1.** Gepfropfte Polyamidoamine und gepfropften Polyethylenimine, dadurch gekennzeichnet, daß sie erhältlich sind durch radikalisch initiierte Polymerisation von

(a) 1-Vinylpyrrolidon, 1-Vinyltriazol, 1-Vinylimidazolen der Formel

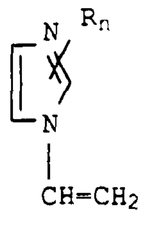

(I),

in der R=H, $CH_3$ oder $C_2H_5$ und n=1 bis 3 bedeuten, Mischungen der genannten Monomeren oder Mischungen aus mindestens einem der genannten Monomeren mit bis zu 20 Gew.-% anderen monoethylenisch ungesättigten Monomeren
in Gegenwart von

(b) wasserlöslichen oder in Wasser dispergierbaren Polyamidoaminen, Polyethyleniminen oder deren Mischungen
im Gewichtsverhältnis (a):(b) von 5:95 bis 95:5.

2. Verfahren zur Herstellung von gepfropften Polyamidoaminen und gepfropften Polyethyleniminen nach Anspruch 1, dadurch gekennzeichnet, daß man

(a) 1-Vinylpyrrolidon, 1-Vinyltriazol, 1-Vinylimidazole der Formel

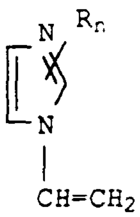

(I),

in der R=H, $CH_3$ oder $C_2H_5$ und n=1 bis 3 bedeuten, Mischungen der genannten Monomeren oder Mischungen aus mindestens einem der genannten Monomeren mit bis zu 20 Gew.-% anderen monoethylenisch ungesättigten Monomeren
in Gegenwart von

(b) wasserlöslichen oder in Wasser dispergierbaren Polyamidoaminen, Polyethyleniminen oder deren Mischungen
im Gewichtsverhältnis (a):(b) von 5:95 bis 95:5 radikalisch polymerisiert.

3. Verwendung der gepfropften Polyamidoamine und der gepfropften Polyethylenimine nach Anspruch 1 als Zusatz zu Waschmitteln zur Inhibierung der Farbstoffübertragung während des Waschvorgangs.

4. Waschmittel auf Basis von Tensiden und gegebenenfalls Buildern sowie anderen üblichen Bestandteilen, dadurch gekennzeichnet, daß sie 0,05 bis 10 Gew.-% eines gepfropften Polyamidoamins und/oder eines gepfropften Polyethylenimins nach Anspruch 1 enthalten.

**Claims**

1. Grafted polyamidoamines and grafted polyethyleneimines obtainable by free-radically initiated polymerization of

(a) 1-vinylpyrrolidone, 1 -vinyl triazole , 1-vinylimidazoles of the formula

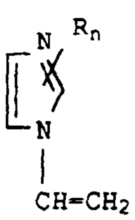

(I),

where R is H, $CH_3$ or $C_2H_5$ and n is from 1 to 3, mixtures of said monomers or mixtures of at least one of said monomers with up to 20% by weight of other monoethylenically unsaturated monomers
in the presence of
(b) water-soluble or -dispersible polyamidoamines, polyethyleneimines or mixtures thereof
in a weight ratio of (a):(b) from 5:95 to 95:5.

2. A process for preparing grafted polyamidoamines and grafted polyethyleneimines as claimed in claim 1, which comprises free-radically polymerizing

(a) 1-vinylpyrrolidone, 1-vinyltriazole, 1-vinylimidazoles of the formula

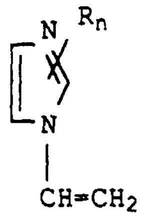

(I),

where R is H, $CH_3$ or $C_2H_5$ and n is from 1 to 3, mixtures of said monomers or mixtures of at least one of said monomers with up to 20% by weight of other monoethylenically unsaturated monomers
in the presence of
(b) water-soluble or -dispersible polyamidoamines, polyethyleneimines or mixtures thereof
in a weight ratio of (a):(b) from 5:95 to 95:5.

**3.** The use of the grafted polyamidoamines and of the grafted polyethyleneimines as claimed in claim 1 as detergent additament for inhibiting dye transfer during washing.

**4.** A detergent composition based on surfactants with or without builders and other customary ingredients, comprising from 0.05 to 10% by weight of a grafted polyamidoamine and/or of a grafted polyethyleneimine as claimed in claim 1.

## Revendications

**1.** Polyamidoamines greffées et polyéthylèneimines greffées, caractérisées en ce qu'elles sont obtenues par polymérisation initiée de façon radicalaire de

a) 1-vinylpyrrolidone, 1-vinyltriazole, 1-vinylimidazoles de formule

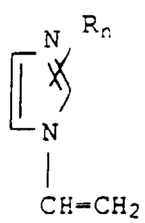

(I),

dans laquelle R = H, $CH_3$ ou $C_2H_5$ et n = 1 à 3, mélanges de ces monomères ou mélanges de l'un au moins de ces monomères avec jusqu'à 20% en poids d'autres monomères à insaturation monoéthylénique,
en présence de
b) polyamidoamines, polyéthylèneimines ou mélanges de celles-ci hydrosolubles ou dispersables dans l'eau,
dans un rapport pondéral (a):(b) de 5:95 à 95:5.

**2.** Procédé de préparation de polyamidoamines greffées et de polyéthylèneimines greffées selon la revendication 1, caractérisé en ce que l'on soumet à une polymérisation radicalaire

a) de la 1-vinylpyrrolidone, du 1-vinyltriazole, des 1-vinylimidazoles de formule

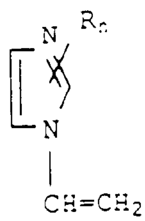

(I),

dans laquelle R = H, $CH_3$ ou $C_2H_5$ et n = 1 à 3, des mélanges de ces monomères ou des mélanges de l'un au moins de ces monomères avec jusqu'à 20% en poids d'autres monomères à insaturation monoéthylénique,

en présence de

b) polyamidoamines, polyéthylèneimines ou mélanges de celles-ci hydrosolubles ou dispersables dans l'eau, dans un rapport pondéral (a):(b) de 5:95 à 95:5.

**3.** Utilisation des polyamidoamines greffées et des polyéthylèneimines greffées selon la revendication 1 comme additif à des produits de lavage, afin d'inhiber le transfert de colorants pendant l'opération de lavage.

**4.** Produits de lavage à base de tensio-actifs et éventuellement d'adjuvants de lavage, ainsi que d'autres constituants usuels, caractérisés en ce qu'ils contiennent 0,05 à 10% en poids d'une polyamidoamine greffée et/ou d'une polyéthylèneimine greffée selon la revendication 1.